# EUROPEAN PATENT SPECIFICATION

(11) **EP 0 512 749 B1**
(45) Date of publication and mention of the grant of the patent: **07.08.1996**
(21) Application number: 92303898.8
(22) Date of filing: 30.04.1992
(51) Int. Cl.: C03B 9/195, C03B 9/295

(54) **Bottom plate for glass forming machine**
Bodenplatte für eine Maschine zum Herstellen von Glasgegenständen
Plaque de fond pour une machine de fabrication d'objets en verre

(30) Priority: 10.05.1991 US 698610
(43) Date of publication of application: 11.11.1992
(73) Proprietor: Emhart Glass Machinery Investments Inc., Wilmington, Delaware 19801 (US)
(72) Inventor: Gorski, Richard A., Suffield, Hartford, Connecticut 06093 (US)
(74) Representative: Randall, John Walter

(56) References cited:
- US-A- 1 979 211
- US-A- 4 416 681

## Description

The present invention relates to machines for making glassware and more particularly to a machine commonly used in the glass industry today and referred to as an H-28 machine.

An H-28 machine such as is disclosed in US Patent 1979211 is a single table continuous rotary motion machine having a plurality of stations mounted for rotation about the axis of the machine. Each station produces glassware each complete revolution or cycle of the machine. Such machines are used to make seamless glassware.

To prevent the formation of seams, the mould which defines each of the stations receives glass which is rotated in the mould as the glassware is formed. Such a mould has side portions which are displaced towards each other to form the periphery of the mould and a bottom plate which closes the bottom of the mould. In some cases it is desirable to form decoration on the bottom of the glassware. As a result, it is necessary to allow the bottom plate to rotate with the glass.

Glass, being abrasive wears these components and as a result they must be periodically replaced.

US Patent Specification 4416681 shows a machine similar to the H-28 machine, ie it is a single table continuous rotary motion machine having a plurality of stations mounted for rotation about the axis of the machine. It comprises a plurality of moulds each of which includes a bottom plate which closes the bottom of the mould, and this bottom plate is allowed to rotate with the glass in the mould.

The machine comprises, for each set of moulds, a pivotally mounted arm by which the bottom plates of such set can be moved between upper, mould closed, and lower, mould open, positions. The bottom plates are mounted on a bracket member which is moved up and down by the arm.

The bracket member supports a supporting shaft which is spring urged upwardly from the bracket member against a stop. Rotatably mounted on the supporting shaft is a bottom plate holder having a cavity with an inturned flange provided with a series of radial gaps.

The bottom plate comprises a downwardly extending stem supporting a flange having a series of radial lugs, so that the bottom plate may be secured in the bottom plate holder by passing the lugs on the bottom plate through the gaps in the inturned flange of the bottom plate holder, and rotating it slightly so that the lugs engage under the inturned flange. A spring detent holds the bottom plate in position. When it is desired to remove a bottom plate, the bottom plate, the bottom plate holder and the supporting shaft are pushed down against the spring urging means until the bottom plate holder engages a radial lug which prevents its rotation. The bottom plate holder is then held against rotation, and the bottom plate can be rotated to release it from the holder.

It is accordingly an object of the present invention to provide a quick change rotating bottom plate which will facilitate changing a worn bottom plate.

The present invention provides a bottom plate assembly for use in a single table, continuous motion, glassware forming machine having a plurality of moulds mounted for rotation about a central axis of the machine, the assembly comprising
a post by which a bottom plate may be supported and comprising a reduced diameter portion,
pivotally mounted holder means including an arm, post supporting means including
a hollow stud
a bearing ball
means for supporting the ball bearing within the stud for supporting the post with its reduced diameter portion within said stud, and
coupling means for releasably coupling the post and said stud including
a plurality of locking pins extending through a corresponding plurality of holes in said stud and
collar means for holding said plurality of locking pins against the reduced diameter portion of the post at a locking orientation and permitting retraction of said locking pins to permit removal of the post from the stud at an unlocking orientation.

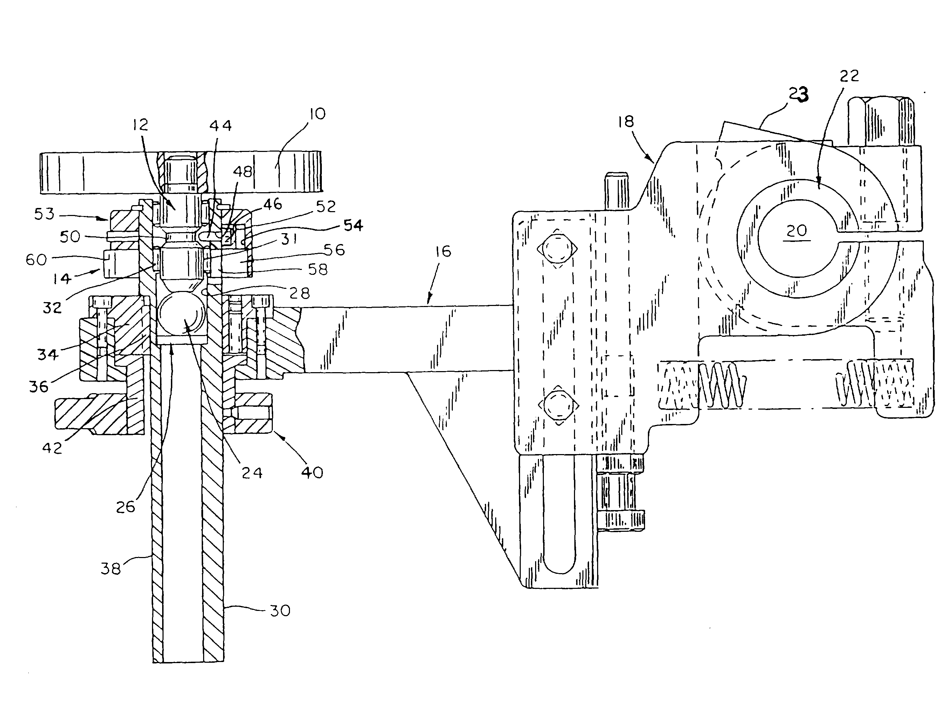

There now follows a description, to be read with reference to the accompanying drawing, of a bottom plate assembly embodying the invention.

The accompanying drawing shows a bottom plate assembly suitable for an H-28 machine.

The bottom plate assembly shown in the drawing is suitable for use in an H-28 machine, that is to say a single table, continuous motion, glassware forming machine having a plurality of moulds mounted for rotation about a central axis of the machine.

The bottom plate assembly comprises a post 12 which supports a bottom plate 10 which closes the bottom of a mould. The post 12 is supported in post supporting means of pivotally mounted holder means which comprises an arm 16 which is held by a holder 18 which is clamped to a rotatable shaft 20 via a bushing 22 and is pivotal between an up (mould closed) position shown, and a down (mould open) position not shown, defined by a stop 23.

The post supporting means comprises a hollow stud 30 having a bore with portions of different diameter.

The bottom plate post 12 rests on a bearing ball 24 which is supported by means comprising a horizontal disc 26 located at the bottom of an intermediate portion 28 of the bore of the stud 30. The post 12 includes a pair of annular bearing surfaces 31 which are rotationally located within axially spaced rings of a bearing 32. The stud 30 is received by a guide 34 mounted on the arm 16, which guide 34 has a key 36 for engaging an axial flat 38 on the stud 30 so that rotation of a hand knob 40, secured to an adjusting nut 42 captured between the guide 34 and the bottom plate arm 16, will change the height of the bottom plate 10 with respect to the arm 16.

Control pins 44 of three buttons 46 (only one of which is shown) are inserted through holes 48 in the hollow stud to cooperate with a reduced diameter portion 50 of the post 12 which is located within the stud 30 to prevent removal of the bottom plate. The buttons will be held in locked position by reduced diameter surfaces 52 of a collar 53 except when the collar is rotated to locate the three buttons at three appropriately spaced notches 54 in the reduced diameter surface (only one of which is shown). Lifting the bottom plate will then result in an inclined lower wall which bounds the reduced diameter post portion 50 camming the buttons outwardly freeing the bottom plate for removal. A spiral torsion spring 56 which extends between a cut out 58 in the stud 30 and the lower edge 60 of the collar 53 normally retains the collar at a locking orientation.

## Claims

1. A bottom plate assembly for use in a single table, continuous motion, glassware forming machine having a plurality of moulds mounted for rotation about a central axis of the machine, the assembly comprising
a post (12) by which a bottom plate (10) may be supported, and comprising a reduced diameter portion (50)
pivotally mounted holder means (16,18) including an arm (16)
post supporting means including
a hollow stud (30)
a bearing ball (24)
means (26) for supporting the bearing ball (24) within the stud (30) for supporting the post (12) with its reduced diameter portion (50) within said stud (30), and
coupling means for releasably coupling the post (12) and said stud (30) including
a plurality of locking pins (44) extending through a corresponding plurality of holes (48) in said stud (30) and
collar means (53) for holding said plurality of locking pins (44) against the reduced diameter portion (50) of the post (12) at a locking orientation and permitting retraction of said locking pins (44) to permit removal of the post (12) from the stud (30) at an unlocking orientation.

2. A bottom plate assembly according to Claim 1, comprising
means for maintaining said collar means (53) at said locking orientation.

3. A bottom plate assembly according to one of Claims 1 and 2, comprising means for changing the axial position of said stud (30).

## Patentansprüche

1. Bodenplattenanordnung für eine durchlaufende Einzeltisch-Formmaschine für Glasartikel mit einer Vielzahl von Formen, die um eine Zentralachse die Maschine umlaufend angeordnet sind, mit
einem eine Bodenplatte (10) tragenden Pfosten (12) mit einem kleinerdurchmessrigen Abschnitt (50),
einer schwenkbar angeordnetenHalteeinrichtung (16, 18) mit einem Arm (16) und
einer den Pfosten tragendenEinrichtung mit
einem hohlen Schaft (30),
einer Lagerkugel (24),
Mitteln (26) zum Haltern der Lagerkugel (24) im Schaft (30) zum Lagern des kleinerdurchmessrigen Abschnitts (50) des Pfostens (12) im Schaft (30) sowie
einer Kopplungseinrichtung zum lösbaren Koppeln des Pfostens (12) mit dem Schaft (30), wobei die Kopplungseinrichtung
eine Vielzahl von Sperrstiften (44), die durch eine entsprechende Vielzahl von Bohrungen (48) im Schaft (30) verläuft, und eine Krageneinrichtung (53) aufweist, die in einer Sperrstellung die Sperrstifte (44) auf dem kleinerdurchmessrigen Abschnitt (50) des Pfostens (12) hält und in einer Freigabestellung ein Zurückziehen der Sperrstifte (44) erlaubt, damit der Pfosten (12) vom Schaft (30) abgezogen werden kann.

2. Bodenplattenanordnung nach Anspruch 1 mit einer Einrichtung, um die Krageneinrichtung (53) in der Sperrstellung zu halten.

3. Bodenplattenanordnung nach einem der Ansprüche 1 und 2, mit einer Einrichtung zum Ändern der axialen Position des Schaftes (30).

## Revendications

1. Dispositif à plaque de fond destiné à être utilisé dans une machine de production verrière à plateau unique et à mouvement continu, munie d'une pluralité de moules montés à rotation autour d'un axe médian de la machine, le dispositif comprenant
un montant (12) par lequel une plaque de fond (10) peut être supportée, et comprenant une zone (50) de diamètre réduit,
des moyens de retenue (16, 18) montés pivotants, présentant un bras (16),
des moyens de support du montant, présentant
une colonne creuse (30),
une bille de portée (24),
un moyen (26) pour supporter la bille de portée (24) à l'intérieur de la colonne (30), en vue de supporter le montant (12), avecsa zone (50) de diamètre réduit à l'intérieur de ladite colonne (30), et
des moyens d'accouplement assurant l'accouplement libérable du montant (12) et de ladite colonne (30), présentant
une pluralité de tétons de verrouillage (44) traversant une pluralité correspondante de trous (48) pratiqués dans ladite colonne (30), et
un moyen à collerette (53) pour retenir, dans une orientation de verrouillage, ladite pluralité de tétons de verrouillage (44) contre la zone (50) du montant (12) qui est pourvue d'un diamètre réduit, et pour autoriser une rétraction desdits tétons de verrouillage (44) afin de permettre, dans une orientation de déverrouillage, une dissociation du montant (12) d'avec la colonne (30).

2. Dispositif à plaques de fond selon la revendication 1, comprenant
un moyen pour maintenir ledit moyen à collerette (53) dans ladite orientation de verrouillage.

3. Dispositif à plaques de fond selon l'une des revendications 1 et 2, comprenant des moyens pour faire varier la position axiale de ladite colonne (30).
